# EUROPÄISCHE PATENTSCHRIFT

(11) **EP 0 825 370 B1**
(45) Veröffentlichungstag und Bekanntmachung des Hinweises auf die Patenterteilung: **10.11.1999**
(21) Anmeldenummer: 97114026.4
(22) Anmeldetag: 14.08.1997
(51) Int. Cl.: F16K 31/40

(54) **Magnetventil**
Solenoid valve
Electrovanne

(30) Priorität: 23.08.1996 DE 29614645 U
(43) Veröffentlichungstag der Anmeldung: 25.02.1998
(73) Patentinhaber: A. und K. Müller GmbH & Co. KG, 40595 Düsseldorf (DE)
(72) Erfinder: Eichholz, Heinz-Dieter, Dr., 58642 Iserlohn (DE); Denkena, Karl Heinz, Dipl.-Ing., 40593 Düsseldorf (DE); Moldenhauer, Hermann, 40625 Düsseldorf (DE)
(74) Vertreter: Feder, Wolf-Dietrich, Dr. Dipl.-Phys.

(56) Entgegenhaltungen:
- DE-A- 3 542 194
- DE-A- 4 419 446
- US-A- 4 142 677
- US-A- 5 125 621
- US-A- 5 361 802

## Beschreibung

Die Erfindung bezieht sich auf ein Magnetventil für sanitäre Armaturen.

In dem Dokument DE-A-35 42 194 ist ein Druckentlastungsventil beschrieben in Form eines Magnetventils mit einem Ventilgehäuse, das einen Ventileingang und einen Ventilausgang aufweist, die in der Ventil-Schließstellung durch einen auf einem Ventilsitz aufsitzenden Ventilkörper abgedichtet voneinander getrennt sind. Das Ventilgehäuse ist im wesentlichen topfförmig ausgebildet und weist im Bereich seines unverschlossenen Endes einen Gewindeabschnitt auf, wobei der Ventilsitz und der Gewindeabschnitt konzentrisch und koaxial zu den Ventilein- und -ausgängen liegen. Die Ventilein- und -ausgänge sind konzentrisch zueinander angeordnet und dem unverschlossenen Ventilgehäuseende zugewandt und die Ein- und Ausströmrichtungen sind entgegengesetzt zueinander ausgerichtet.

Herkömmliche Magnetventile lassen sich bei den gegebenen Einbau-Verhältnissen nur schlecht integrieren und auch nur unter Inkaufnahme, daß das Design solcher Armaturen ungewöhnlich groß ist. Um dies zu vermeiden, sind auch Lösungen bekannt, bei denen man den Ventilsitz sowie die Aufnahmekontur der Ventilmembran in die Gehäuse der Armaturen einformt und bei der Montage das Vorsteuerventil entsprechend anpaßt. Dieser Weg ist problematisch, weil die hohen maßlichen Anforderungen an den Ventilsitz und die Aufnahmekontur der Membran vom Magnetventil-Hersteller auf die Gehäusefertigung der Sanitär-Armaturen übergehen. Außerdem kann die Magnetventil-Funktion für sich nicht geprüft werden. Dies führt zu Gewährleistungsproblemen zwischen den Lieferanten der Magnetventilteile und dem Hersteller der Sanitär-Armaturen.

Im Wartungs- und Reparaturfall ist keine auswechselbare Funktionseinheit "Magnetventil" vorhanden.

Hier setzt die vorliegende Erfindung ein, deren Aufgabe es ist, eine geschlossene und gedichtete Magnetventil-Bauform zu schaffen, die sich in einfacher Weise, unter Vermeidung der vorgenannten Probleme und Nachteile, in Gehäusen von Sanitär-Armaturen integrieren läßt.

Die Aufgabe wird erfindungsgemäß entsprechend den Merkmalen aus Patentanspruch 1 gelöst durch ein Magnetventil für sanitäre Armaturen, mit einem Ventilgehäuse, das einen Ventileingang und einen Ventilausgang aufweist, die in der Ventilschließstellung durch einen auf einem Ventilsitz aufsitzenden Ventilkörper abgedichtet voneinander getrennt sind, wobei der Ventilkörper eine Membran, insbesondere eine Rollmembran, aufweist, und an der vom Ventilsitz abgewandten Seite der Membran eine Gegendruckkammer angeordnet ist, die über einen Kanal mit dem Ventileingang und über eine Düse eines durch einen Magnet-Plunger eines bistabilen Elektromagneten gesteuerten Vorsteuerventils mit dem Ventilausgang verbunden ist, wobei das Ventilgehäuse im wesentlichen topfförmig ausgebildet ist und im Bereich seines unverschlossenen Endes einen Gewindeabschnitt aufweist, und die Membran, der Ventilsitz sowie der Gewindeabschnitt konzentrisch und koaxial zu den Ventilein- und Ventilausgängen liegen, die jeweils rotationssymmetrisch ausgebildet und konzentrisch zueinander dem unverschlossenen Ventilgehäuseende zugewandt sind derart, daß der Ventilausgang zentrisch angeordnet und vom Ventileingang umgeben ist und die Ein- und Ausströmrichtungen entgegengesetzt zueinander ausgerichtet sind.

Der rotationssymmetrische Aufbau des Magnetventiles mit koaxial zueinander angeordnetem Ein- und Ausgang erlaubt eine kompakte, platzsparende Konstruktion sowie einen problemlosen und platzsparenden Einbau.

Die aufnehmende Gehäusekontur ist ohne besondere Tolerenzanforderungen in einfacher Weise zu fertigen. Dabei kann der Außendurchmesser des Gehäuses < 35mm sein.

Das Magnetventil beinhaltet dabei die komplette Ventilfunktion, so daß diese Baugruppe komplett vor dem Einbau geprüft werden kann.

Bei Wartung und Reparatur läßt sich das Magnetventil mit handelsüblichem Werkzeug leicht ausbauen. Ein gegebenenfalls im Ventileingang sitzender Filter und ein im Ventilausgang optional vorgesehener Mengenregler sind dann zugänglich und können gereinigt oder ersetzt werden.

Weitere Vorteile und Merkmale der Erfindung ergeben sich aus den abhängigen Ansprüchen sowie aus der Beschreibung und der Zeichnung.

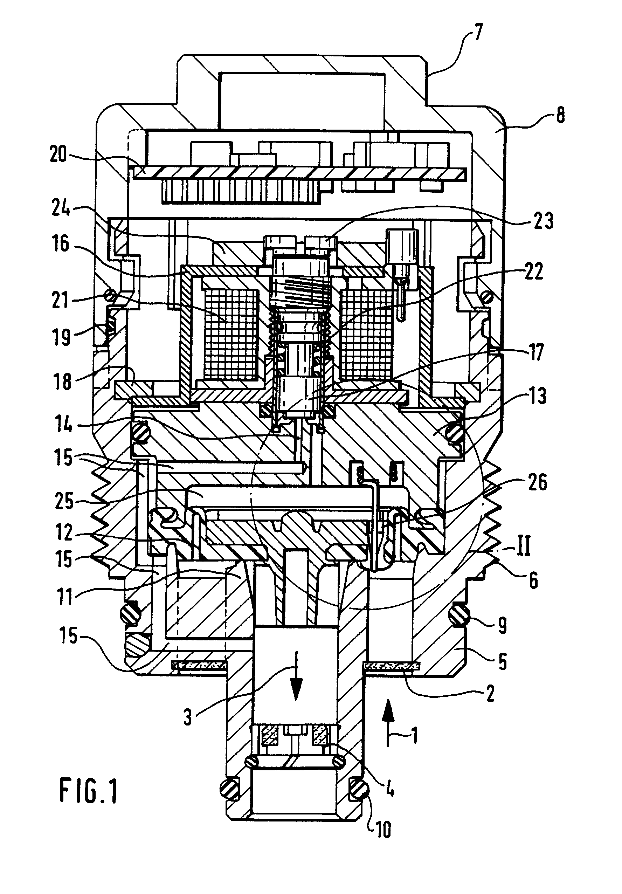

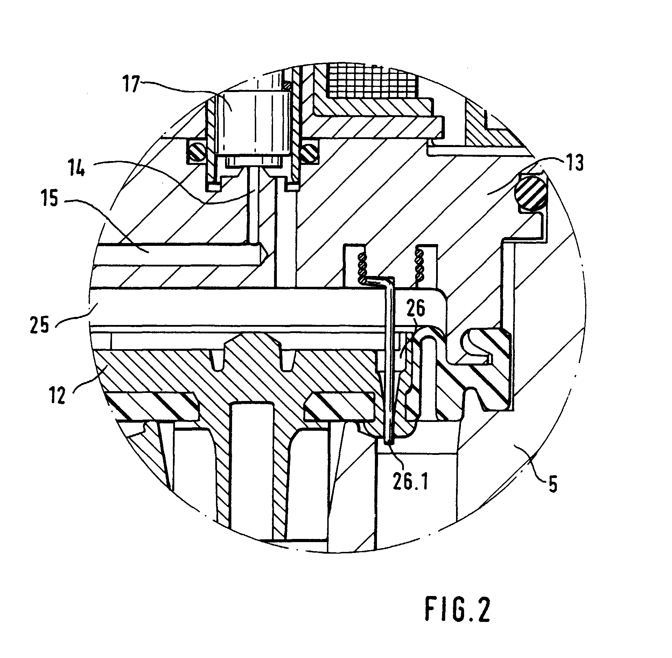

Anhand der Zeichnung wird eine bevorzugte Ausführungsform der Erfindung erläutert. Figur 1 zeigt das Magnetventil im Längsschnitt, und Figur 2 zeigt in vergrößerter Darstellung eine Schnittansicht des Details "II" in Figur 1.

Das Magnetventil besteht aus einem Ventilgehäuse-Unterteil 5 mit koaxial angeordneten Ventil-Eingangsdurchlässen 1 sowie dem zentral vorgesehenen Ventilausgang 3. In den Ventileingang 1 ist ein feinmaschiges Sieb 2 eingesetzt, um Fest- und Schwebestoffe abzufangen. Der Ventilausgang 3 kann mit einem Durchfluß-Mengenregler 4 ausgestattet werden.

Ein zu den Ventilein- und Ventilausgängen 1, 3 konzentrisches und koaxiales Befestigungsgewinde 6 und eine Sechskantkontur 7 an dem kappenförmigen Ventilgehäuse-Oberteil 8 dienen dem Einbau in ein nicht dargestelltes Armaturen-Gehäuse, wobei O-Ringe 9 und 10 die Dichtfunktion erfüllen. Der Ventilsitz 11 ist kegelförmig erweitert, so daß durch diese trichterförmige Ausbildung der KV-Wert, bezogen auf die Nennweite des Ventiles, außergewöhnlich hoch z.B. > 1,2 m³/h ist und die Anforderungen von Wasch- und Urinalspül-Armaturen abdeckt. Im Ventilgehäuse-Unterteil 5 ist außerdem die Membran, insbesondere Rollmembran, 12, die auf die O-ring-gedichtete Adapterplatte 13 aufgeknöpft ist, aufgenommen. Innerhalb der Adapterplatte 13 ist die Düse 14 des Vorsteuerventiles angeordnet. Über die Kanäle 15 ist der Düsenausgang mit dem Ventilausgang 3 verbunden.

Auf die Adapterplatte 13 ist der Elektromagnet 16 mit Plunger 17 aufgesetzt. Das Magnetsystem ist bistabil mit Impulsansteuerung, einer Impulsleistung < 1W und Batterieversorgung ausgelegt.

Ein Sicherungsring 18 fixiert die Einbauteile im Ventilgehäuse-Unterteil 5. Das Ventilgehäuse-Unterteil 5 ist mit dem Ventilgehäuse-Oberteil 8 über eine arretierende Schnappverbindung mit O-Ring-Abdichtung 19 verschlossen, die die Verdrehung des Oberteils 8 gegen das Ventilgehäuse-Unterteil verhindert. Das Ventilgehäuse-Oberteil 8 kann eine Elektronik-Leiterplatte 20 mit Anschlüssen aufnehmen, wobei diese fixiert und wasserdicht vergossen ist.

Die Darstellung nach Figur 1 zeigt das Ventil im geschlossenen Zustand mit bistabilem Elektromagneten.

Das oben beschriebene Ventil arbeitet wie folgt:

Wenn die Erregerspule 21 des Elektromagneten 16 einen Gleichstromimpuls erhält, wird der Magnetplunger 17 entgegen der Kraft der Feder 22 an den Weicheisenkern der Hubeinstellschraube 23 gezogen. Die Magnetkraft des Permanentmagneten 24 ist dabei größer als die Kraft der Feder, so daß der Plunger in dieser Stellung verbleibt, wenn der Erregerstromimpuls abschaltet.

Durch die Hubbewegung des Plungers wird die Vorsteuerdüse 14 geöffnet, so daß ein Druckabfall in der mittels des Kanals 26 an den Ventileingang 1 angeschlossenen Gegendruckkammer 25 die Folge ist. Der auf die Unterseite der Membran 12 wirkende Wasserdruck hebt diese in Richtung Gegendruckkammer, so daß der Ventilsitz 11 geöffnet wird und das Wasser durch den Ventileingang 1 in den Ventilausgang 3 fließt.

Soll der Ventilsitz 11 wieder geschlossen werden, so wird die Erregerspule 21 mit umgekehrter Polarität bestromt, wodurch das Magnetfeld des Permanentmagneten 24 so weit geschwächt wird, daß die Druckfeder 22 den Plunger von seiner Anschlagfläche löst, so daß die Vorsteuerdüse 14 geschlossen wird. Nun füllt sich die Gegendruckkammer 25 über einen seitlich in der Membran 12 angeordneten Kanal 26 wieder auf, wobei der daraus resultierende Druckaufbau in der Gegendruckkammer 25 zum Schließen des Ventilsitzes 11 durch Aufsitzen der Membran führt.

In dem Kanal 26 ist ein federbelasteter Reinigungsstift 26.1 geführt.

## Patentansprüche

1. Magnetventil für sanitäre Armaturen mit einem VenVentilgehäuse, (5; 8), das einen Ventileingang (1) und einen Ventilausgang (3) aufweist, die in der Ventilschließstellung durch einen auf einem Ventilsitz (11) aufsitzenden Ventilkörper abgedichtet voneinander getrennt sind, wobei der Ventilkörper eine Membran (12), insbesondere eine Rollmembran, aufweist, und an der vom Ventilsitz (11) abgewandten Seite der Membran (12) eine Gegendruckkammer (25) angeordnet ist, die über einen Kanal (26) mit dem Ventileingang (1) und über eine Düse (14) eines durch einen Magnet-Plunger (17) eines bistabilen Elektromagneten (16) gesteuerten Vorsteuerventils mit dem Ventilausgang (3) verbunden ist, wobei das Ventilgehäuse (5; 8) im wesentlichen topfförmig ausgebildet ist und im Bereich seines unverschlossenen Endes einen Gewindeabschnitt (6) aufweist, und die Membran (12), der Ventilsitz (11) sowie der Gewindeabschnitt (6) konzentrisch und koaxial zu den Ventilein- und Ventilausgängen (1; 3) liegen, die jeweils rotationssymmetrisch ausgebildet und konzentrisch zueinander dem unverschlossenen Ventilgehäuseende zugewandt sind derart, daß der Ventilausgang (3) zentrisch angeordnet und vom Ventileingang (1) umgeben ist und die Ein- und Ausströmrichtungen entgegengesetzt zueinander ausgerichtet sind.

2. Magnetventil nach Anspruch 1, dadurch gekennzeichnet, daß das Ventilgehäuse aus zwei rastend und verdrehsicher ineinandergefügten Gehäuseunter- und Gehäuseoberteilen (5; 8) besteht, wobei ein O-Ring (19) die Gehäuseunter- und Gehäuseoberteile gegeneinander abdichtet.

3. Magnetventil nach Anspruch 1, dadurch gekennzeichnet, daß das Ventilgehäuse-Oberteil (8) kappenförmig ausgebildet ist und an seinem verschlossenen Ende eine Sechskantkontur (7) aufweist, und daß in dem Ventilgehäuse-Oberteil (8) eine Elektronik-Leiterplatte (20) mit Anschlußleitungen oder Anschlußkontakten fixiert und wasserdicht vergossen ist.

4. Magnetventil nach Anspruch 1, dadurch gekennzeichnet, daß der Elektromagnet die Impulsleistung < 1 Watt hat.

5. Magnetventil nach Anspruch 1, dadurch gekennzeichnet, daß der Außendurchmesser des Gehäuses < 35 mm beträgt.

6. Magnetventil nach Anspruch 1, dadurch gekennzeichnet, daß der Ventilsitz (11) trichterförmig ausgebildet ist.

7. Magnetventil nach Anspruch 1, dadurch gekennzeichnet, daß der KV-Wert > 1,2 m³/h ist.

8. Magnetventil nach Anspruch 1, dadurch gekennzeichnet, daß im Ventileingang (1) ein feinmaschiger Filter (2) vorgesehen ist.

9. Magnetventil nach Anspruch 1, dadurch gekennzeichnet, daß in dem Ventilausgang (3) ein Durchfluß-Mengenregler (4) eingesetzt ist.

## Revendications

1. Vanne magnétique pour robinetteries sanitaires, comportant une cage de vanne (5, 8) qui présente une entrée (1) et une sortie (3) lesquelles, en position de fermeture de la vanne, sont séparées de manière étanche l'une de l'autre par un corps de vanne reposant sur un siège (11), ledit corps présentant une membrane (12), en particulier une membrane roll-O-matic, sur le côté de ladite membrane (12) opposé au siège (11) étant disposée une chambre de contre pression (25) qui est reliée par un canal (26) à l'entrée (1) et par un gicleur (14) d'une vanne préliminaire commandée par un piston plongeur magnétique (17) d'un électro-aimant bi-stable à la sortie (3), tandis que la cage (5, 8) a sensiblement la forme d'un pot et présente dans la région de son extrémité non-fermée une section filetée (6), et que la membrane (12), le siège (11) ainsi que la section filetée (6) sont placés centralement et coaxialement par rapport à l'entrée et à la sortie (1, 3), lesquelles sont respectivement symétriques et orientées vers l'extrémité non fermée de la cage de vanne de manière centrée l'une par rapport à l'autre, de telle sorte que la sortie (3) est disposée de manière centrée et entourée par l'entrée (1), et que les directions du flux d'entrée et du flux de sortie sont orientées dans des sens antagonistes.

2. Vanne magnétique selon la revendication 1, caractérisée en ce que la cage est constituée de deux parties (5,8), une inférieure et une supérieure, lesquelles sont emmanchées l'une dans l'autre et encliquetées de manière indesserrable, un joint torique (19) assurant leur étanchéité réciproque.

3. Vanne magnétique selon la revendication 1, caractérisée en ce que la partie supérieure (8) de la cage) est en forme de chapeau et présente sur son extrémité fermée un contour hexagonal (7), et qu'à l'intérieur de la partie supérieure (8) de la cage est fixée et intégrée de manière étanche par moulage une plaquette à circuits électroniques (20) contenant des circuits de connexion ou des contacts de connexion.

4. Vanne magnétique selon la revendication 1, caractérisée en ce que la puissance d'impulsion de l'électro-aimant est inférieure à 1 Watt.

5. Vanne magnétique selon la revendication 1, caractérisée en ce que le diamètre extérieur de la cage est inférieur à 35 mm.

6. Vanne magnétique selon la revendication 1, caractérisée en ce que le siège de vanne (11) est en forme d'entonnoir.

7. Vanne magnétique selon la revendication 1, caractérisée en ce que le coefficient d'amplification du canal est supérieur à 1,2 m³/h.

8. Vanne magnétique selon la revendication 1, caractérisée en ce que dans l'entrée (1) de la vanne est prévu un filtre (2) à maillage fin.

9. Vanne magnétique selon la revendication 1, caractérisée en ce que dans la sortie (3) de la vanne est inséré un régulateur de débit (4).

## Claims

1. Solenoid valve for sanitary fittings, with a valve housing (5; 8) which has a valve inlet (1) and a valve outlet (3) which, in the valve closure position, are separated from each other in sealed manner by a valve body resting on a valve face (11), wherein the valve body has a diaphragm (12), particularly a roller diaphragm, and a counterpressure chamber (25), which is connected to the valve inlet (1) by means of a duct (26) and to the valve outlet (3) by means of a nozzle (14) of a pilot valve controlled by a magnetic plunger (17) of a bistable electromagnet (16), is arranged on the side of the diaphragm (12) which faces away from the valve face (11), wherein the valve housing (5; 8) is substantially pot-shaped in design and in the region of its unsealed end it has a threaded section (6), and the diaphragm (12), the valve face (11) and the threaded section (6) are concentric and coaxial to the valve inlet and outlet (1; 3), both of which are rotationally symmetrical and face the unsealed valve housing end concentrically with respect to each other in such a way that the valve outlet (3) is arranged centrically and is surrounded by the valve inlet (1) and the inflow and outflow directions are aligned opposite to each other.

2. Solenoid valve according to Claim 1, characterized in that the valve housing consists of two housing lower and housing upper parts (5; 8) inserted into each other in latching and rotation-proof manner, wherein an O-ring (19) seals off the housing lower and housing upper parts with respect to each other.

3. Solenoid valve according to Claim 1, characterized in that the valve housing upper part (8) is cap-shaped and has a hexagonal contour (7) at its sealed end and in that an electronic circuit board (20) with connecting leads or connecting contacts is fixed and embedded in water-tight manner in the valve housing upper part (8).

4. Solenoid valve according to Claim 1, characterized in that the electromagnet has the pulse rating < 1 Watt.

5. Solenoid valve according to Claim 1, characterized in that the external diameter of the housing is < 35 mm.

6. Solenoid valve according to Claim 1, characterized in that the valve face (11) is funnel-shaped.

7. Solenoid valve according to Claim 1, characterized in that the KV value is > 1.2 m³/h.

8. Solenoid valve according to Claim 1, characterized in that a fine-mesh filter (2) is provided in the valve inlet (1).

9. Solenoid valve according to Claim 1, characterized in that a flow controller (4) is inserted in the valve outlet (3).
